# EUROPÄISCHE PATENTSCHRIFT

(11) **EP 0 752 940 B1**
(45) Veröffentlichungstag und Bekanntmachung des Hinweises auf die Patenterteilung: **02.12.1998**
(21) Anmeldenummer: 95913055.0
(22) Anmeldetag: 27.03.1995
(51) Int. Cl.: B60T 8/36

(54) **ELEKTROHYDRAULISCHE DRUCKEINSTELLVORRICHTUNG, INSBESONDERE FÜR EINE SCHLUPFGEREGELTE FAHRZEUGBREMSANLAGE**
ELECTRO-HYDRAULIC PRESSURE REGULATING DEVICE, ESPECIALLY FOR A CONTROLLED-SLIP VEHICLE BRAKE SYSTEM
DISPOSITIF ELECTRO-HYDRAULIQUE REGULATEUR DE PRESSION, NOTAMMENT POUR SYSTEME DE FREINAGE A ANTIPATINAGE D'UN VEHICULE

(30) Priorität: 13.04.1994 DE 4412665
(43) Veröffentlichungstag der Anmeldung: 15.01.1997
(73) Patentinhaber: ROBERT BOSCH GMBH, 70442 Stuttgart (DE)
(72) Erfinder: STAIB, Helmut, D-71701 Schwieberdingen (DE); GLOCK, Günther, D-71711 Steinheim (DE); FRIEDOW, Michael, D-71732 Tamm (DE); LANDER, Jürgen, D-70563 Stuttgart (DE); PECHTOLD, Ulrich, D-71732 Tamm (DE)
(86) Internationale Anmeldenummer: DE9500412
(87) Internationale Veröffentlichungsnummer: WO9528304

(56) Entgegenhaltungen:
- WO-A-92/08630
- DE-A- 4 100 967
- DE-A- 4 141 546
- GB-A- 686 658
- GB-A- 2 074 233
- US-A- 5 364 067

## Beschreibung

### Stand der Technik

Die Erfindung geht aus von einer elektrohydraulischen Druckeinstellvorrichtung nach der Gattung des Patentanspruchs.

Aus DE 41 00 967 A1 ist schon eine solche elektrohydraulische Druckeinstellvorrichtung bekannt, bei der in einem haubenförmigen Deckel die Spulen von Magnetventilen elastisch nachgiebig aufgehängt sind, um beim Fügen mit einem Ventilblock relativ zu diesem, d. h. radial und axial ausrichtbar zu sein. Hierzu sind elastische Halterungen in Form von Schraubendruckfedern zwischen dem Deckel und den Spulen vorgesehen, um eine gegen den Ventilblock gerichtete Kraft auf die Spulen zu erzeugen. Nach dem Fügen soll durch eine definierte axiale Anpressung der Spulen gegen den Ventilblock deren Lage gesichert werden. Solange der Fügevorgang jedoch noch nicht stattgefunden hat, sind die Spulen im Deckel an einem Anschlag abgestutzt, um die Kraft der Federn aufzunehmen, damit Kontaktelemente, welche die Spulen mit einem oberhalb diesen angeordneten elektronischen Regler im Deckel verbinden, nicht überbeansprucht werden. Der konstruktive Aufwand zum Abfangen der Federkräfte im Deckel ist relativ hoch.

### Vorteile der Erfindung

Die erfindungsgemäße Druckeinstellvorrichtung mit den kennzeichnenden Merkmalen des Patentanspruchs hat demgegenüber den Vorteil, daß die Federkraft erst beim Fügen der Spule auf den Ventilblock wirksam wird, d. h. vor dem Fügevorgang sind Kontaktelemente der Spule keiner Belastung durch die Federkraft unterworfen. Darüber hinaus kann ein Federelement in der Form eines Federblechs mit geringer Bauhöhe ausgebildet werden. Ferner ist als vorteilhafte Weiterbildung der Erfindung eine relativ flache Federkennlinie realisierbar, was Kraftänderungen über den Federweg begrenzt.

Durch die in den Unteransprüchen aufgeführten Maßnahmen sind vorteilhafte Weiterbildungen und Verbesserungen der im Patentanspruch angegebenen Druckeinstellvorrichtung möglich.

Die Ausgestaltung der Erfindung nach Anspruch 2 hat den Vorteil der querkraftfreien Einleitung der Federkraft in die Spule.

Mit der Weiterbildung der Erfindung nach Anspruch 3 werden durch die einteilige Form des bei mehreren Spulen anwendbaren Federblechs Fertigungs- und Montagevorteile erzielt.

Die Maßnahme nach Anspruch 4 hat den Vorteil, daß das Federblech unverlierbar vormontiert werden und bei seiner Anordnung am Deckel auch einen Transportschutz für die im Deckel befindliche Spule bilden kann.

### Zeichnung

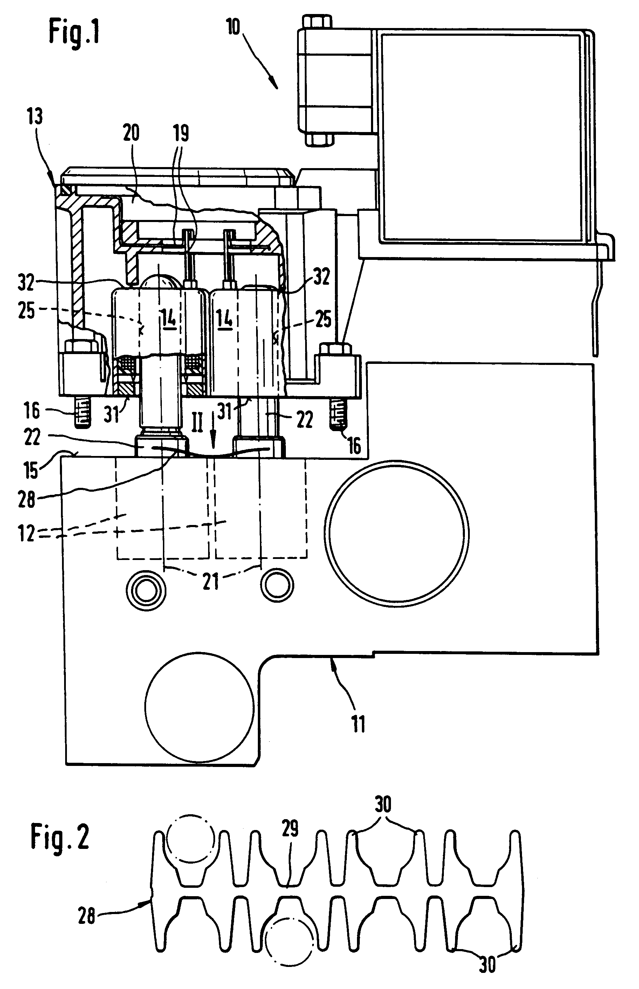

Ein Ausführungsbeispiel der Erfindung ist in der Zeichnung vereinfacht dargestellt und in der nachfolgenden Beschreibung näher erläutert. Es zeigen Figur 1 eine Ansicht einer Druckeinstellvorrichtung während des Fügens von in einem Deckel aufgenommenen Spulen auf einen Ventilblock und Figur 2 eine Ansicht in Richtung des Pfeiles II in Figur 1 gesehen auf ein zwischen den Spulen und dem Ventilblock angeordnetes Federelement.

### Beschreibung des Ausführungsbeispiels

Eine in Figur 1 dargestellte elektrohydraulische Druckeinstellvorrichtung 10 für eine schlupfgeregelte Fahrzeugbremsanlage besteht im wesentlich aus einem Ventilblock 11, in dem Ventile 12 aufgenommen sind, und aus einem haubenförmigen Deckel 13 mit darin angeordneten elektrischen Elementen wie Spulen 14 für die elektromagnetische Betätigung der Ventile 12. Figur 1 gibt einen Zustand beim Fügen des Deckels 13 auf den Ventilblock 11 wieder. In fertigmontiertem Zustand ist der Deckel 13 entlang einer Stützfläche 15 des Ventilblocks 11 mit diesem vereinigt und durch Schrauben 16 verbunden.

Die Ventile 12 sind im Ventilblock 11 in zwei Reihen angeordnet, welche sich parallel zueinander verlaufend senkrecht zur Zeichenebene erstrecken. In gleicher Weise sind die im wesentlichen aus Wicklung, Wicklungsträger, Anschlußdrähten und magnetflußleitenden Mantel bestehenden Spulen 14 innerhalb des Deckels 13 angeordnet. Die Spulen 14 sind durch nachgiebige elektrische Kontaktelemente 19 mit einem im Deckel 13 angeordneten elektronischen Regler 20 verbunden. Aufgrund der Nachgiebigkeit der Kontaktelemente 19 können die Spulen 14 in bezüglich ihrer Längsachse 21 axialer und radialer Richtung Veränderungen ihrer Lage im Deckel 13 unterworfen werden.

Die Ventile 12 haben jeweils einen über die Stützfläche 15 des Ventilblocks 11 rechtwinklig aufragenden Ventildom 22. Der Durchmesser der kreiszylindrischen Ventildome 22 ist passend auf die Innenbohrung 25 der Spulen 14 abgestimmt. Da die Ventildome 22 trotz genauer Fertigung Toleranzen hinsichtlich ihrer Lage sowie ihres Achsenverlaufs unterworfen sind, vermögen die Spulen 14 während des Fügens des Deckels 13 auf den Ventilblock 11 beim Stecken auf die Ventildome aufgrund der Nachgiebigkeit ihrer Halterung im Deckel 13 diesen Abweichungen zu folgen, d. h. die jeweilige, ausgerichtete Spule 14 verläuft gleichachsig zum zugeordneten Ventildom 22.

Bei in einem Fahrzeug montierter Druckeinstellvorrichtung 10 muß sichergestellt sein, daß die bei der Montage des Deckels 13 auf den Ventilblock 11 erwünschte axiale Nachgiebigkeit der Spulen 14 unter den im Fahrbetrieb herrschenden Bedingungen aufgehoben ist. Zu diesem Zweck ist am Ventilblock 11 ein Federelement in der Form eines Federbleches 28 angeordnet. Das in Figur 2 in der Draufsicht wiedergegebene Federblech 28 besitzt einen in Längsrichtung durchgehenden Steg 29, von dem rechtwinklig zu diesem verlaufende Federzungen 30 nach beiden Seiten ausgehen. Jeweils zwei benachbarte Federzungen 30 sind einer Spule 14 zugeordnet. Bei auf dem Ventilblock 11 aufgelegtem Federblech 28 ist der Steg 29 an der Stützfläche 15 abgestützt, während die Federzungen 30 mit ihrem freien Ende einen Abstand zur Stützfläche einnehmen. Dabei schließen die erwähnten Federzungenpaare jeweils einen Ventildom 22 zwischen sich ein, wie dies in Figur 2 mit strichpunktiert gezeichneten Kreisen angedeutet ist. Während des Montagevorgangs des die Spulen 14 und Ventildome 22 bedeckenden Deckels 13 auf den Ventilblock 11 stützen sich die Spulen mit ihrer ventilblockseitigen Stirnseite 31 in der letzten Phase des Fügevorgangs auf den blattfederartig ausgebildeten Federzungen 30 des Federblechs 28 ab. Dabei greifen die Federzungen 30 an diametral gegenüberliegenden Zonen der Spulenstirnseite 31 an. Die Federzungen 30 bewirken nun bei zunehmender Vorspannung eine begrenzte axiale Verschiebung der Spulen 14 gegen eine ventilblockabgewandte Stützfläche 32, welche der Deckel 13 für jede Spule bereitstellt. Bei seine Endlage bezüglich des Ventilblocks 11 einnehmendem Deckel 13 sind die Federzungen 30 des Federblechs 28 auf ein solches Maß vorgespannt, daß die erzielte Federkraft bei betriebsmäßiger Schüttel- und Schlagbeanspruchung der Druckeinstellvorrichtung 10 eine Lageänderung der Spulen 14 nicht mehr zuläßt. Hierdurch wird eine Überlastung, d. h. ein Bruch der elektrischen Kontaktelemente 19 der Spulen 14 verhindert. Da die Federzungen 30 des Federblechs 28 mit relativ flach verlaufender Federkennlinie ausgebildet sein können, sind Kraftabweichungen bei geringen Unterschieden in der Endlage der Spulen 14 im Deckel 13 ebenfalls gering.

Im dargestellten Ausführungsbeispiel ist das Federblech 28 zwischen dem Ventilblock 11 und dem Deckel 13 eingelegt. Abweichend hiervon kann das Federblech 28 mit im Bereich des Steges 29 liegenden, nicht dargestellten Befestigungselementen versehen sein, wie Zungen, die beispielsweise in eine Bohrung des Ventilblocks 11 eingreifen und darin verrastet sind. Hierdurch wird das Federblech 28 unverlierbar, so daß es bei der Montage der Baugruppe Ventilblock 11 bereits an dieser angeordnet werden kann. Die Befestigungselemente können aber auch zur Abordnung des Federblechs 28 am Deckel 13 oder an wenigstens einer Spule 14 ausgebildet sein. Bei einer ausreichend innigen Verbindung mit dem Deckel 13 kann das Federblech 28 darüber hinaus als Transportschutz für die im Deckel 13 montierten Spulen 14 bis zur Fertigmontage am Ventilblock 11 dienen.

## Patentansprüche

1. Elektrohydraulische Druckeinstellvorrichtung (10), inbesondere für eine schlupfgeregelte Fahrzeugbremsanlage, mit wenigstens einem elektromagnetisch betätigbaren Ventil (12), das mit einem Ventilblock (11) vereinigt ist und einen vom Ventilblock aufragenden Ventildom (22) sowie eine zu dem Ventildom ausrichtbare und auf diesen steckbare Spule (14) hat, mit einem die Spule (14) und den Ventildom (22) bedeckenden, am Ventilblock (11) befestigten Deckel (13) sowie mit einem die aufgesteckte Spule (14) axial haltenden Federelement (28), wobei die Spule des Ventils (12) vor dem Fügen von Deckel und Ventilblock elastisch nachgiebig am Deckel (13) aufgehängt ist, dadurch gekennzeichnet, daß das Federelement ein Federblech (28) ist, welches einerseits am Ventilblock (11) und andererseits an der Spule (14) angreift und daß die Spule ventilblockabgewandt am Deckel (13) axial abgestützt ist.

2. Elektrohydraulische Druckeinstellvorrichtung nach Anspruch 1, dadurch gekennzeichnet, daß das Federblech (28) an diametral gegenüberliegenden Zonen der ventilblockzugewandten Stirnseite (31) der Spule (14) angreift.

3. Elektrohydraulische Druckeinstellvorrichtung nach Anspruch 1 oder 2, mit in zwei parallelen Reihen gegenüberliegend angeordneten Ventilen (12), dadurch gekennzeichnet, daß das Federblech (28) einen sich zwischen den Reihen erstreckenden, am Ventilblock (11) abgestützten Steg (29) hat, von dem im wesentlichen rechtwinklig zu diesem verlaufende Federzungen (30) zu den Spulen (14) beider Reihen ausgehen.

4. Elektrohydraulische Druckeinstellvorrichtung nach Anspruch 1 oder 3, dadurch gekennzeichnet, daß das Federblech (28) unverlierbar am Deckel (13), an wenigstens einer Spule (14) oder am Ventilblock (11) gehalten ist.

## Claims

1. Electrohydraulic pressure setting device (10), especially for a traction-controlled vehicle brake system, with at least one electromagnetically actuable valve (12) which is combined with a valve block (11) and which has a valve dome (22) projecting upwards from the valve block and a coil (14) capable of being aligned with the valve dome and of being plugged onto the latter, with a cover (13) covering the coil (14) and the valve dome (22) and fastened to the valve block (11), and with a spring element (28) holding the plugged-on coil (14) axially, the coil of the valve (12) being suspended on the cover (13) in an elastically resilient manner before the cover and valve block are assembled, characterized in that the spring element is a spring plate (28) which engages, on the one hand, on the valve block (11) and, on the other hand, on the coil (14), and in that the coil is supported axially, facing away from the valve block, on the cover (13) .

2. Electrohydraulic pressure setting device according to Claim 1, characterized in that the spring plate (20) engages on diametrically opposite zones of that end face (31) of the coil (14) which faces the valve block.

3. Electrohydraulic pressure setting device according to Claim 1 or 2, with valves (12) arranged opposite one another in two parallel rows, characterized in that the spring plate (28) has a web (29) which extends between the rows and is supported on the valve block (11) and from which spring tongues (30) running essentially at right angles to the said web extend to the coils (14) of the two rows.

4. Electrohydraulic pressure setting device according to Claim 1 or 3, characterized in that the spring plate (28) is held captively on the cover (13), on at least one coil (14) or on the valve block (11) .

## Revendications

1. Système hydroélectrique de réglage de la pression (10), en particulier pour une installation de freinage de véhicules à antipatinage, avec au moins une vanne (12) qui peut être actionnée de façon électromagnétique, vanne (12) qui est réunie à un bloc de vannes (11) et qui a un dôme de vanne (22) qui fait saillie à partir du bloc de vannes et une bobine (14) qui peut être orientée sur le dôme de la vanne et peut être insérée sur celui-ci, avec un couvercle (13), qui recouvre la bobine (14) et le dôme de la vanne (22), et qui est fixé sur le bloc de vannes (11), ainsi qu'avec un élément qui fait ressort (28), qui maintient axialement la bobine insérée (14), la bobine de la vanne (12) étant accrochée élastiquement de façon flexible sur le couvercle (13) avant la jonction du couvercle et du bloc de vannes,
caractérisé en ce que
- l'élément qui fait ressort est une tôle d'acier à ressort (28) qui vient en prise d'une part sur le bloc de vannes (11) et d'autre part sur la bobine (14) et
- la bobine prend appui axialement sur le couvercle (13) en étant tournée à l'opposé du bloc de vannes.

2. Système hydroélectrique de réglage de la pression selon la revendication 1,
caractérisé en ce que
la tôle à ressort (28) vient en prise sur des zones, qui sont diamétralement opposées, de la face frontale (31) de la bobine (14), qui est tournée vers le bloc de vannes.

3. Système hydroélectrique de réglage de la pression selon la revendication 1 ou 2, avec des vannes (12) disposées les unes en face des autres sur deux rangées parallèles,
caractérisé en ce que
la tôle à ressort (28) a une entretoise (29), qui s'étend entre les rangées et qui prend appui sur le bloc de vannes (11), entretoise (29) à partir de laquelle des languettes à ressort (30) qui s'étendent sensiblement à angle droit par rapport à celle-ci, sortent vers les bobines (14) des deux rangées.

4. Système hydroélectrique de réglage de la pression selon la revendication 1 ou la revendication 3,
caractérisé en ce que
la tôle à ressort (28) est maintenue sur le couvercle (13) de façon imperdable, sur au moins une bobine (14) ou sur le bloc de vannes (11).
